# EUROPEAN PATENT APPLICATION

(11) **EP 3 613 615 A1**
(43) Date of publication of application: **26.02.2020**
(21) Application number: 19188651.4
(22) Date of filing: 26.07.2019
(51) Int. Cl.: B60C 19/00

(54) **PNEUMATIC TIRE**

(30) Priority: 22.08.2018 JP 2018155601
(71) Applicant: Toyo Tire Corporation, Itami-shi, Hyogo 664-0847 (JP)
(72) Inventor: SAKAKIBARA, Kazuhiro, Itami-shi, Hyogo 664-0847 (JP)
(74) Representative: Eisenführ Speiser

(57) **Abstract**

A pneumatic tire 1 includes: a sound absorbing member 10 that is made of sponge, attached to a tire inner surface 1a of a tread portion 3, and extends in a tire circumferential direction; and a cloth 20 that is attached to a tire radially inner surface of the sound absorbing member 10, and extends in the tire circumferential direction.

## Description

### BACKGROUND OF THE INVENTION

### Technical Field

The present invention relates to a pneumatic tire.

### Related Art

It is known that air inside a tire generates cavernous resonance with vibration caused from a tire contact surface when a vehicle travels on a rough road surface or passes through a joint of a road surface, or in other situations. Cavernous resonance may produce noise in an interior of the vehicle, wherefore reduction of cavernous resonance has been attempted.

For example, JP 2017-202790 A discloses a pneumatic tire which reduces cavernous resonance by attaching a plate-shaped member to a tire inner surface of a tread portion. The plate-shaped member includes a plurality of through holes and a plurality of slits extending in a tire circumferential direction. A plurality of cylindrical supporting members extending in a tire width direction are inserted into the plurality of slits. The plate-like member after insertion of the supporting members into the slits is attached to the tire inner surface of the tread portion.

### SUMMARY

According to the pneumatic tire described in JP 2017-202790 A, however, the plate-shaped member is attached to the tire inner surface of the tread portion after formation of the plurality of through holes and the plurality of slits in the plate-shaped member, and insertion of the plurality of supporting members into the slits. In this case, productivity may decrease during manufacture of the tire.

Accordingly, an object of the present invention is to provide a pneumatic tire capable of reducing cavernous resonance and improving productivity.

The present invention provides a pneumatic tire including: a sound absorbing member that is made of sponge, attached to a tire inner surface of a tread portion, and extends in a tire circumferential direction; and a cloth that is attached to a tire radially inner surface of the sound absorbing member, and extends in the tire circumferential direction.

According to the present invention, sound generated by vibration of air in a tire interior in accordance with vibration from a tire contact surface decreases while passing through the sound absorbing member made of sponge and also passing through the cloth. Accordingly, this configuration reduces cavernous resonance generated in the tire interior by resonance of sound produced by vibration of air in the tire interior in accordance with vibration from the tire contact surface. The cloth has the openings formed by a combination of yarns. This configuration decreases sound while the sound is passing through the openings. Accordingly, cavernous resonance decreases. In addition, sound passing through the cloth causes vibration of the cloth. This vibration decreases the sound, wherefore cavernous resonance decreases.

Moreover, the cloth has a surface which includes protrusions and recesses formed by a combination of the yarns. In this case, sound generated by vibration of air in the tire interior in accordance with vibration from the tire contact surface is reduced by the protrusions and recesses formed on the tire radially inner surface of the cloth while the sound is passing through the sound absorbing member and the cloth and radially transmitted. Accordingly, cavernous resonance further decreases.

In addition, cavernous resonance can be reduced only by attaching the sound absorbing member made of sponge and the cloth to the tire inner surface of the tread portion during manufacture of the tire. Accordingly, this configuration achieves manufacture relatively easily, and improves productivity.

The cloth is preferably made of woven cloth.

According to this configuration, the cloth which is made of woven cloth has a combination of the warp yarns and the weft yarns which produce the openings, and a surface including protrusions and recesses. Accordingly, cavernous resonance decreases. The cloth made of woven cloth is also capable of changing the size of the openings appropriately to effectively reduce cavernous resonance.

It is preferable that the cloth is made of woven cloth, and includes warp yarns and weft yarns arranged with inclination of 45 degrees to the tire circumferential direction and a tire width direction, respectively.

According to this configuration, the cloth is made of woven cloth which includes the warp yarns and the weft yarns arranged with inclination of 45 degrees to the tire circumferential direction and the tire width direction, respectively. In this case, the warp yarns and the weft yarns can be deformed in accordance with bending deformation and twisting deformation of the tire inner surface at the time of tire contact. Accordingly, cavernous resonance generated in the tire interior by vibration from the tire contact surface can be effectively reduced.

It is preferable that the sound absorbing member is attached to the tire inner surface of the tread portion throughout a tire circumference.

According to this configuration, cavernous resonance can be more effectively reduced than in a configuration which attaches the sound absorbing member to the tire inner surface of the tread portion only in a part of the tire circumference.

It is preferable that the cloth is attached to the tire radially inner surface of the sound absorbing member throughout the tire circumference.

According to this configuration, cavernous resonance can be more effectively reduced than in a configuration which attaches the cloth to the tire radially inner surface of the sound absorbing member only in a part of the tire circumference.

The cloth may be sewn on the sound absorbing member.

According to this configuration, yarns for sewing the cloth on the sound absorbing member can also form protrusions and recesses on the tire radially inner surface of the sound absorbing member. Accordingly, sound of the tire interior generated by vibration from the tire contact surface further decreases during radial transmission of the sound, wherefore cavernous resonance further decreases.

The sound absorbing member may include a plurality of protrusions that are disposed on the tire radially inner surface of the sound absorbing member and apart from each other in the tire circumferential direction, and protrude inward in a tire radial direction.

According to this configuration, the plurality of protrusions disposed on the tire radially inner surface of the sound absorbing member and apart from each other in the tire circumferential direction form protrusions and recesses on the tire radially inner surfaces of the sound absorbing member and the cloth attached to the sound absorbing member. Accordingly, sound of the tire interior generated by vibration from the tire contact surface further decreases during radial transmission of the sound, wherefore cavernous resonance further decreases.

According to the pneumatic tire of the present invention, reduction of cavernous resonance and improvement of productivity are both achievable.

### BRIEF DESCRIPTION OF THE DRAWINGS

The foregoing and the other features of the present invention will become apparent from the following description and drawings of an illustrative embodiment of the invention in which:
Fig. 1 is a longitudinal cross-sectional view of a pneumatic tire according to a first embodiment of the present invention;
Fig. 2 is a transverse cross-sectional view of a pneumatic tire according to the first embodiment of the present invention;
Fig. 3 is a view showing a sound absorbing member and a cloth attached to a tire inner surface;
Fig. 4 is a longitudinal cross-sectional view of a pneumatic tire according to a second embodiment of the present invention;
Fig. 5 is a transverse cross-sectional view of a pneumatic tire according to the second embodiment of the present invention;
Fig. 6 is a view showing a sound absorbing member and a cloth attached to a tire inner surface; and
Fig. 7 is a view showing a modified example of the pneumatic tire according to the second embodiment of the present invention.

### DETAILED DESCRIPTION OF EMBODIMENTS

Embodiments of the present invention will be hereinafter described with reference to the accompanying drawings.

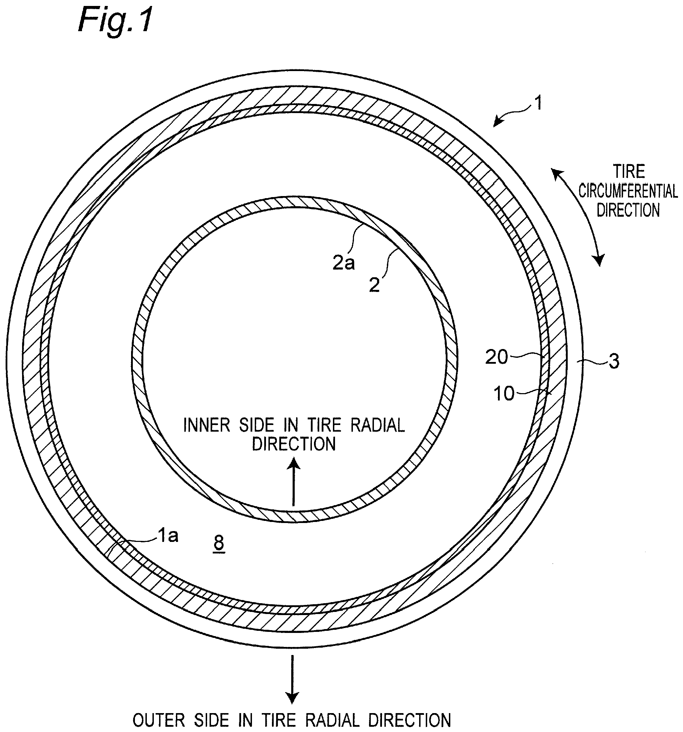

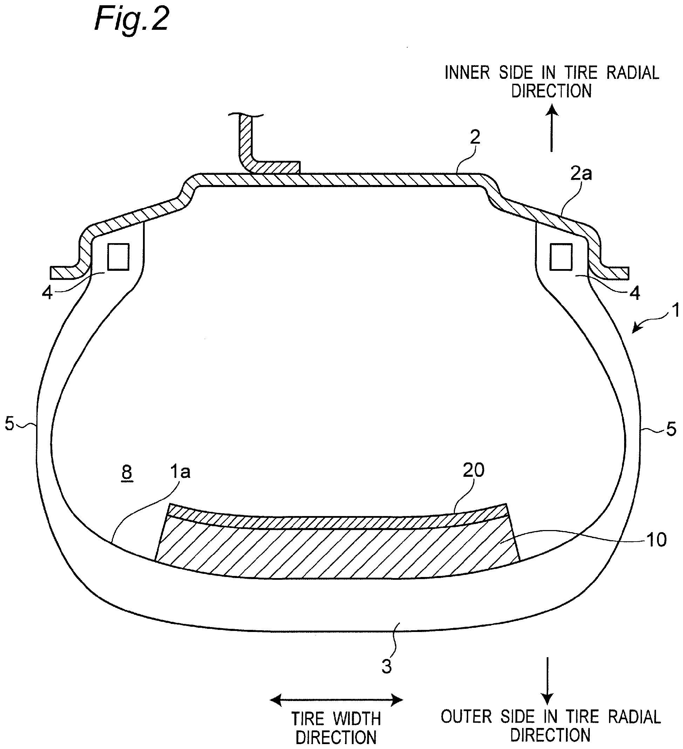

Fig. 1 is a longitudinal cross-sectional view of a pneumatic tire according to a first embodiment of the present invention, while Fig. 2 is a transverse cross-sectional view of the pneumatic tire according to the first embodiment of the present invention. As shown in Figs. 1 and 2, a pneumatic tire 1 made of rubber according to the first embodiment of the present invention is assembled to a wheel 2 to produce a vehicle wheel constituted by the pneumatic tire 1 and the wheel 2. The pneumatic tire has an annular shape. A tire interior (inner cavity) 8 having an annular shape is formed by a tire inner surface 1a of the pneumatic tire 1 and an outer surface of a rim 2a of the wheel 2.

As shown in Fig. 2, the pneumatic tire 1 includes: a tread portion 3 located on an outer side in a tire radial direction and in contact with a road surface; bead portions 4 provided on both sides, located on an inner side in the tire radial direction, and assembled to the rim 2a of the wheel 2; and side wall portions 5 provided on both sides, each located between the tread portion 3 and the corresponding one of the bead portions 4 on both sides, and extending in the tire radial direction.

The pneumatic tire 1 includes a not-shown carcass between the bead portions 4 on both sides, and a not-shown inner liner provided on the tire inner surface side of the carcass and constituting the tire inner surface 1a. The inner liner is provided to maintain air pressure, and is made of rubber which prevents permeation of air.

According to the present embodiment, a sound absorbing member 10 extending in a tire circumferential direction is attached to the tire inner surface 1a of the pneumatic tire 1, more specifically, the tire inner surface 1a of the tread portion 3. In addition, a cloth 20 extending in the tire circumferential direction is further attached to a tire radially inner surface of the sound absorbing member 10.

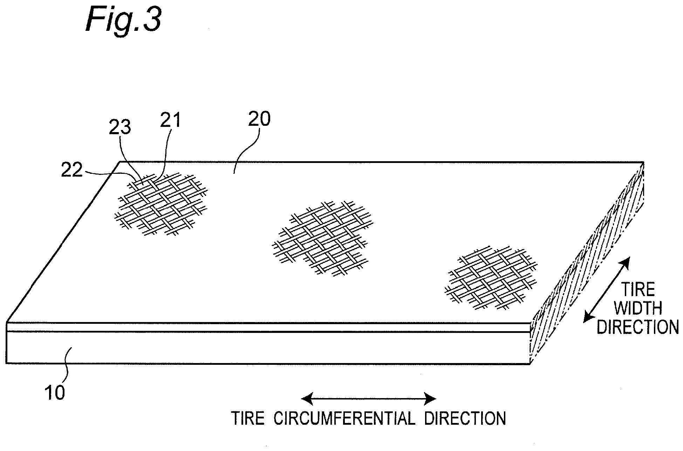

Fig. 3 is a view showing the sound absorbing member and the cloth attached to the tire inner surface. Fig. 3 illustrates the sound absorbing member and the cloth in a state before attachment to the tire inner surface. The sound absorbing member 10 and the cloth 20 provided on the tire inner surface 1a are each so formed as to extend in the tire circumferential direction throughout a tire circumference. The cloth 20 is attached to the tire radially inner surface of the sound absorbing member 10 throughout the tire circumference, in such a manner as to extend throughout the tire radially inner surface of the sound absorbing member 10 as shown in Fig 3.

The sound absorbing member 10 and the cloth 20 are preferably so formed as to extend in the tire circumferential direction throughout the tire circumference. However, the sound absorbing member 10 and the cloth 20 may be so formed as to extend in the tire circumferential direction only in a part of the tire circumference. Similarly, the cloth 20 is preferably attached to the tire radially inner surface of the sound absorbing member 10 throughout the tire circumference. However, the cloth 20 may be attached to the tire radially inner surface of the sound absorbing member 10 only in a part of the tire circumference.

The sound absorbing member 10 has a sheet shape and extends in the tire circumferential direction. The sound absorbing member 10 is made of porous sponge, and includes open cells or closed cells formed by foaming synthetic resin or the like. The sound absorbing member 10 made of sponge preferably has a specific gravity in a range from 0.021 g/cm³ to 0.027 g/cm³ (inclusive). A polyurethane sponge may be employed as the sound absorbing member 10, for example. However, various types of sponge may be adopted. The sound absorbing member 10 is attached to the tire inner surface 1a using an appropriate bonding means such as an adhesive and a double-sided tape.

The sound absorbing member 10 is sized to have a length in a tire width direction in a range from 30% to 70% (inclusive) of a tire width which is a maximum width in a tire width direction of the pneumatic tire 1. When the length of the sound absorbing member 10 in the tire width direction is smaller than 30% of the tire width, a cavernous resonance reduction effect decreases. When the length of the sound absorbing member 10 in the tire width direction is larger than 70% of the tire width, the sound absorbing member 10 may be attached to the tire inner surface 1a of the side wall portion 5 and separated from the tire inner surface 1a.

The cloth 20 has a sheet shape and extends in the tire circumferential direction. The cloth 20 is constituted by woven cloth including warp yarns 21 and weft yarns 22 crossing each other. The cloth 20 is preferably constituted by woven cloth which includes the warp yarns 21 and the weft yarns 22 arranged with inclination of 45 degrees to the tire circumferential direction and the tire width direction, respectively. Cloth made of woven cloth such as plain woven cloth, twilled woven cloth, and satin woven cloth may be employed as the cloth 20.

The cloth 20 has square openings 23 produced by a combination of the warp yarns 21 and the weft yarns 22, and has a surface which includes protrusions and recesses formed by the warp yarns 21 and the weft yarns 22. Natural fiber or chemical fiber may be employed as the warp yarns 21 and the weft yarns 22 constituting the cloth 20. The cloth 20 is fixed to the sound absorbing member 10 using an appropriate bonding means, such as an adhesive, a double-sided tape, and ultrasonic bonding.

For manufacturing the pneumatic tire 1 configured as described above, the tire 1 is initially manufactured by vulcanization in a die, and the sound absorbing member 10 made of sponge and the cloth 20 made of woven cloth are produced. Subsequently, the cloth 20 is fixed to the sound absorbing member 10. The sound absorbing member 10 to which the cloth 20 has been attached is further attached to the tire inner surface 1a of the vulcanized tire 1 to manufacture a pneumatic tire.

After the sound absorbing member 10 and the cloth 20 are each formed into a substantially planar shape, the cloth 20 is attached to the sound absorbing member 10. Thereafter, the sound absorbing member 10 to which the cloth 20 has been attached is further attached to the tire inner surface 1a to obtain an annular or substantially annular shape. Alternatively, each of the sound absorbing member 10 and the cloth 20 may be initially formed into an annular shape before the cloth 20 is attached to the sound absorbing member 10. After the attachment, the sound absorbing member 10 and the cloth 20 may be attached to the tire inner surface 1a to obtain an annular shape.

According to the present embodiment, the cloth 20 is made of woven cloth which includes warp yarns and weft yarns arranged with inclination of 45 degrees to the tire circumferential direction and the tire width direction, respectively. However, the cloth 20 may be made of woven cloth which includes warp yarns and weft yarns arranged with inclination of an angle different from 45 degrees to the tire circumferential direction and the tire width direction, respectively, or woven cloth which includes warp yarns and weft yarns arranged in parallel to the tire circumferential direction and the tire width direction, respectively. The cloth 20 made of woven cloth herein may be made of knits, braids such as flat braids, nets, laces or the like.

Moreover, according to the present embodiment, the sound absorbing member 10 and the cloth 20 are each formed into an annular or substantially annular shape by attaching the cloth 20 to the one sound absorbing member 10, and then attaching the one sound absorbing member 10 to the tire inner surface 1. However, an annular or substantially annular shape may be obtained by attaching a cloth to each of a plurality of sound absorbing members which have been divided, and then attaching the plurality of sound absorbing members to the tire inner surface.

As described above, the pneumatic tire 1 according to the present embodiment includes: the sound absorbing member 10 that is made of sponge, attached to the tire inner surface 1a of the tread portion 3, and extends in the tire circumferential direction; and the cloth 20 that is attached to the tire radially inner surface of the sound absorbing member 10, and extends in the tire circumferential direction.

According to this configuration, sound generated by vibration of air in the tire interior 8 in accordance with vibration from a tire contact surface decreases while passing through the sound absorbing member 10 made of sponge and also passing through the cloth 20. Accordingly, this configuration reduces cavernous resonance generated in the tire interior 8 by resonance of sound produced by vibration of air in the tire interior 8 in accordance with vibration from the tire contact surface. The cloth 20 has the openings 23 formed by a combination of yarns. This configuration decreases sound while the sound is passing through the openings 23. Accordingly, cavernous resonance decreases. In addition, sound passing through the cloth 20 causes vibration of the cloth. This vibration decreases the sound, thereby reducing cavernous resonance.

Moreover, the cloth 20 has a surface which includes protrusions and recesses formed by a combination of the yarns 21 and 22. In this case, sound generated by vibration of air in the tire interior 8 in accordance with vibration from the tire contact surface is reduced by the protrusions and recesses formed on the tire radially inner surface of the cloth 20 while the sound is passing through the sound absorbing member 10 and the cloth 20 and radially transmitted. Accordingly, cavernous resonance further decreases.

In addition, cavernous resonance can be reduced only by attaching the sound absorbing member 10 made of sponge and the cloth 20 to the tire inner surface 1a of the tread portion 3 during manufacture of the tire. Accordingly, this configuration achieves manufacture relatively easily, and improves productivity.

The sound generated by vibration of air in the tire interior 8 partially includes sound reflected by the rim 2a and generated by vibration from the tire contact surface during radial transmission of the sound. This sound includes sound radially expanding from the tire contact surface, and sound reflected from the rim 2a. The sound generated by vibration of air in the tire interior 8 in accordance with vibration from the tire contact surface can also be reduced by the sound absorbing member 10 and the cloth 20 during radial transmission of the sound. Accordingly, cavernous resonance decreases.

The cloth 20 which is made of woven cloth has the openings 23, and a surface including protrusions and recesses produced by a combination of the warp yarns 21 and the weft yarns 22. This configuration reduces cavernous resonance. The cloth 20 made of woven cloth is also capable of changing the size of the openings 23 appropriately to effectively reduce cavernous resonance.

The cloth 20 is made of woven cloth which includes the warp yarns 21 and the weft yarns 22 arranged with inclination of 45 degrees to the tire circumferential direction and the tire width direction, respectively. In the configuration which includes the warp yarns 21 and the weft yarns 22 arranged with inclination of 45 degrees to the tire circumferential direction and the tire width direction, respectively, the warp yarns 21 and the weft yarns 22 can be deformed in accordance with bending deformation and twisting deformation of the tire inner surface at the time of tire contact. Accordingly, cavernous resonance generated in the tire interior 8 by vibration from the tire contact surface can be effectively reduced.

The sound absorbing member 10 is attached to the tire inner surface 1a of the tread portion 3 throughout the tire circumference. Accordingly, cavernous resonance can be more effectively reduced than in a configuration which attaches the sound absorbing member 10 to the tire inner surface 1a of the tread portion 3 only in a part of the tire circumference.

The cloth 20 is attached to the tire radially inner surface of the sound absorbing member 10 throughout the tire circumference. Accordingly, cavernous resonance can also be more effectively reduced than in a configuration which attaches the cloth 20 to the tire radially inner surface of the sound absorbing member 10 only in a part of the tire circumference.

According to the present embodiment, the cloth 20 is fixed to the sound absorbing member 10 using an appropriate bonding means such as an adhesive, a double-sided tape, and ultrasonic bonding. However, the cloth 20 may be sewn on the sound absorbing member 10 using a sewing device or the like.

In this case, yarns for sewing the cloth 20 on the sound absorbing member 10 can also form protrusions and recesses on the tire radially inner surface of the sound absorbing member 10. Accordingly, sound of the tire interior 8 generated by vibration from the tire contact surface further decreases during radial transmission of the sound, wherefore cavernous resonance further decreases.

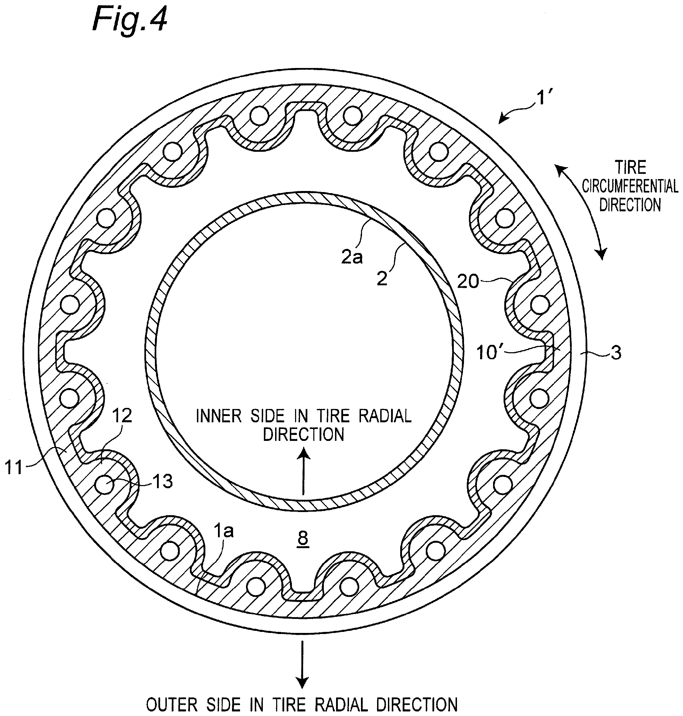

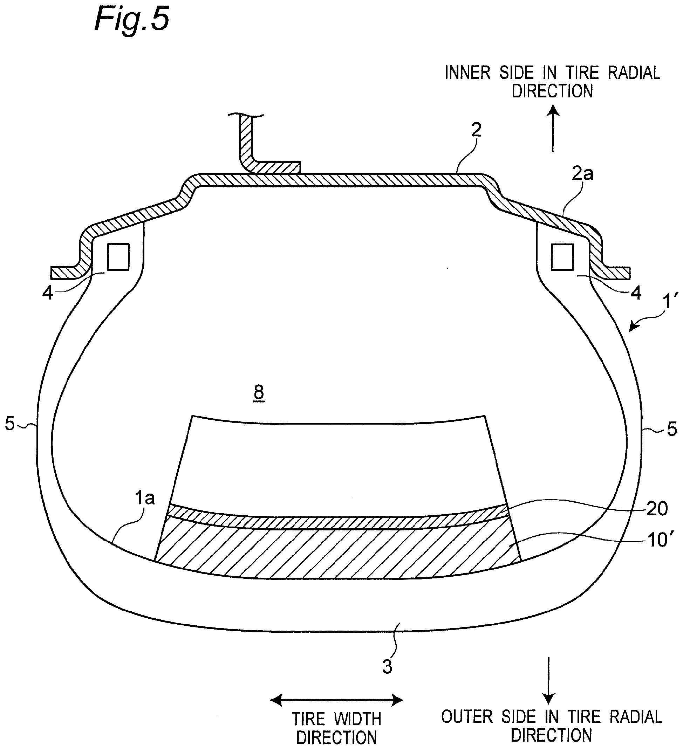

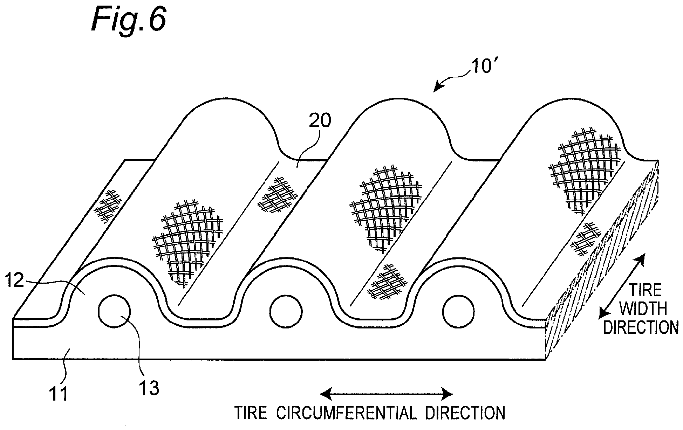

Fig. 4 is a longitudinal cross-sectional view of a pneumatic tire according to a second embodiment of the present invention. Fig. 5 is a transverse cross-sectional view of the pneumatic tire according to the second embodiment of the present invention. Fig. 6 is a view showing a sound absorbing member and a cloth attached to a tire inner surface. The pneumatic tire according to the second embodiment is similar to the pneumatic tire according to the first embodiment except for the shape of the sound absorbing member. Accordingly, similar configurations will not be repeatedly described.

As shown in Figs. 4 to 6, a pneumatic tire 1' according to the second embodiment also includes the tread portion 3, the bead portions 4 on both sides, and the side wall portions 5 on both sides. A sound absorbing member 10' extending in the tire circumferential direction is attached to the tire inner surface 1a of the tread portion 3. The cloth 20 extending in the tire circumferential direction is attached to a tire radially inner surface of the sound absorbing member 10'.

According to the present embodiment, the sound absorbing member 10' is formed into a sheet shape extending in the tire circumferential direction, and includes a base 11 formed in a substantially flat plate shape, and a plurality of protrusions 12 protruding inward in the tire radial direction from the tire radially inner surface of the sound absorbing member 10'. The plurality of protrusions 12 are spaced apart from each other in the tire circumferential direction. The plurality of protrusions 12 spaced apart from each other are preferably arranged at equal intervals in the tire circumferential direction. Each of the plurality of protrusions 12 extends in the tire width direction, and has a substantially semicircular shape as viewed in the tire width direction. A hollow portion 13 which is circular is formed inside each of the plurality of protrusions 12 and penetrates the corresponding protrusion 12 in the tire width direction.

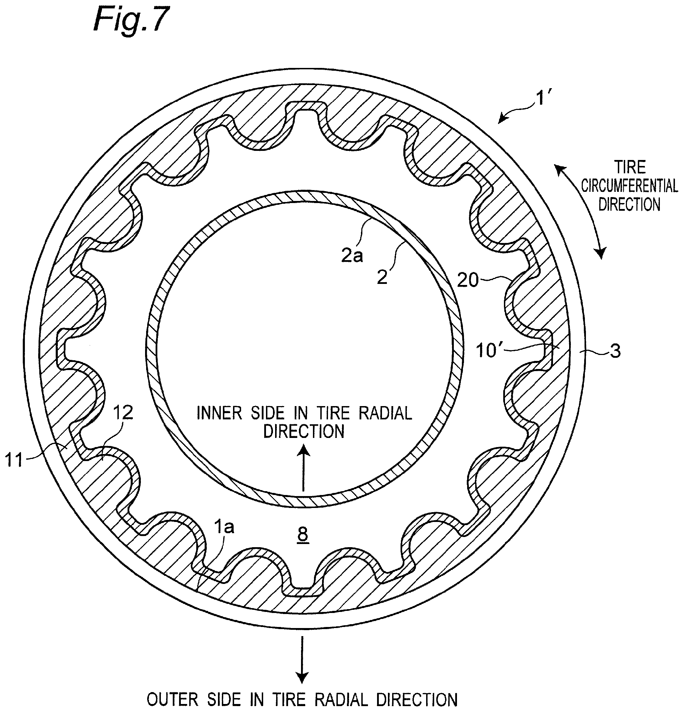

While each of the protrusions 12 of the sound absorbing member 10' has a substantially semicircular shape as viewed in the tire width direction, each of the protrusions 12 may have other shapes such as a substantially triangular shape and a substantially rectangular shape as viewed in the tire width direction. While the hollow portion 13 which is circular is formed in each of the protrusions 12 of the sound absorbing member 10', the hollow portion 13 having other shapes such as a rectangular shape may be formed. Alternatively, hollow portions may be eliminated as shown in Fig. 7.

The pneumatic tire 1' according to the present embodiment includes: the sound absorbing member 10' that is made of sponge, attached to the tire inner surface 1a of the tread portion 3, and extends in the tire circumferential direction; and the cloth 20 that is attached to the tire radially inner surface of the sound absorbing member 10', and extends in the tire circumferential direction. This configuration similarly reduces cavernous resonance, and improves productivity.

In addition, the sound absorbing member 10' includes the plurality of protrusions 12 disposed on the tire radially inner surface of the sound absorbing member 10', spaced apart from each other in the tire circumferential direction, and protruding inward in the tire radial direction. In this case, the plurality of protrusions 12 disposed apart from each other in the tire circumferential direction form protrusions and recesses on the tire radially inner surfaces of the sound absorbing member 10' and the cloth 20 attached to the sound absorbing member 10'. Accordingly, sound of the tire interior 8 generated by vibration from the tire contact surface further decreases during radial transmission of the sound, wherefore cavernous resonance further decreases.

The hollow portion 13 is further formed in each of the protrusions 12 of the sound absorbing member 10', and penetrates the corresponding protrusion 12 in the tire width direction. This configuration causes diffused reflection of sound on an inner surface of the hollow portion 13 while the sound generated by vibration of air in the tire interior 8 in accordance with vibration from the tire contact surface is passing through the sound absorbing member 10' made of sponge. Accordingly, the sound is attenuated by the diffused reflection, wherefore cavernous resonance further decreases.

The present invention is not limited to the respective embodiments presented by way of example. Various improvements and design changes may be made without departing from the scope of the present invention.

## Claims

1. A pneumatic tire, comprising:
a sound absorbing member that is made of sponge, attached to a tire inner surface of a tread portion, and extends in a tire circumferential direction; and
a cloth that is attached to a tire radially inner surface of the sound absorbing member, and extends in a tire circumferential direction.

2. The pneumatic tire according to claim 1, wherein the cloth is made of woven cloth.

3. The pneumatic tire according to claim 2, wherein the cloth is made of woven cloth, and includes warp yarns and weft yarns arranged with inclination of 45 degrees to the tire circumferential direction and a tire width direction, respectively.

4. The pneumatic tire according to any one of claims 1 to 3, wherein the sound absorbing member is attached to the tire inner surface of the tread portion throughout a tire circumference.

5. The pneumatic tire according to claim 4, wherein the cloth is attached to the tire radially inner surface of the sound absorbing member throughout the tire circumference.

6. The pneumatic tire according to any one of claims 1 to 5, wherein the cloth is sewn on the sound absorbing member.

7. The pneumatic tire according to any one of claims 1 to 6, wherein the sound absorbing member includes a plurality of protrusions that are disposed on the tire radially inner surface of the sound absorbing member and apart from each other in the tire circumferential direction, and protrude inward in a tire radial direction.
